# EUROPEAN PATENT SPECIFICATION

(11) **EP 1 755 854 B1**
(45) Date of publication and mention of the grant of the patent: **20.11.2013**
(21) Application number: 05754881.0
(22) Date of filing: 01.06.2005
(51) Int. Cl.: B29C 45/14, B62D 1/06, B29C 33/14, B29C 51/28, B29C 51/14, B29C 51/00

(54) **METHOD AND MOLD FOR MANUFACTURING DECORATIVE COMPONENTS FOR MOTOR VEHICLE INTERIORS**
VERFAHREN UND WERKZEUG ZUR HERSTELLUNG VON ZIERKOMPONENTEN FÜR KRAFTFAHRZEUGINNENRÄUME
PROCÉDÉ ET MOULE POUR LA PRODUCTION DES ÉLÉMENTS DECORATIFS POUR DES INTERIEURS DE VEHICULES AUTOMOBILES

(30) Priority: 10.06.2004 EP 04425423
(43) Date of publication of application: 28.02.2007
(73) Proprietor: KEY SAFETY SYSTEMS, INC., Sterling Heights, MI 48314 (US)
(72) Inventor: MENALDO, Lorenzo, I-37069 Villafranca (IT); TESTA, Giuseppe, I-37031 Illasi (IT); RIDOLFI, Adolfo, I-37039 Tregnago (IT); SALVORO, Roberto, I-37039 Illasi (IT)
(74) Representative: Gislon, Gabriele
(86) International application number: PCT/US2005/019107
(87) International publication number: WO 2005/123362

(56) References cited:
- EP-A- 1 029 770
- EP-A- 1 604 797
- WO-A-97/43164
- GB-A- 554 346
- US-A- 5 264 062
- US-A- 5 744 210
- PATENT ABSTRACTS OF JAPAN vol. 018, no. 313 (C-1212), 15 June 1994 (1994-06-15) -& JP 06 065543 A (SADAO MAKITA), 8 March 1994 (1994-03-08)

## Description

The present invention relates to decorative components for motor vehicle interiors, as well as to a method and devices for their production.

In the automotive field the demand for decorative parts or components, in particular made of wood, continues to rise. It is known to cover an aluminum or plastic core with a layer of wood or other decorative layer that is glued and finished manually.

To reduce the time required by such manual operations, techniques have been developed that produce a laminated shell in a one-step method with a wood veneer and a supporting layer of a thermosetting resin. A disadvantage of this technique is that pieces with hooks, locking rims and other mechanical attachment means cannot be produced. Another disadvantage is the long production times.

US 5,792,302 discloses a process for the production of steering wheels with a wood veneer as a surface layer. Two layers of wood are pre-formed in two half-shells that are placed in a mold with the metal armature of the steering wheel. An expansion resin is then injected into a space between the metal armature and the half-shells, according to the Reaction Injection Molding technique, in order to force the half-shells against the mold and bond them together. Alternatively, two half-shells already supplied with the expanded resin portion are produced separately and glued to the metal armature of the steering wheel. This technique has several drawbacks because pieces with means of attachment or locking rims or undercuts cannot be produced. During the foaming Reaction Injection Molding flash is formed that must be removed by hand. The pre-forming and Reaction Injection Molding molding times are particularly long, reaching 40 minutes each. Moreover, like in the thermosetting-resin molding technique, it also requires a manual finishing step.

Nearest prior art document US 5,264,062 discloses production methods for a composite molded article having a wood overlay surface material. This document teaches to laminate the wood overlay surface to a metal or resin sheet that is backed on the other side to a porous or fibrous material; the wood overlay veneer of the thus obtained laminate is then coated, possibly after polishing. According to one of the disclosed production methods, the coated laminated material is preliminary molded (formed) by press working before a thermoplastic supporting layer is injection molded to the back of the material.

US 5,863,479 discloses a method of producing a laminated or composite material having a wood overlay veneer wherein the wood veneer is backed with a thin aluminium sheet, treated with a primer-based colorant and coated with a resin layer before being pre-formed in a conventional mold using a press. The thus obtained piece is placed into a mold and a backing resin supporting layer and a front transparent coating layer are injected into the mold. GB 554 346 discloses a mold having a deformable bolster to press a sheet of material.

The above methods are long and complex, involving several coupling and coating steps and are limited to pre-forming of very simple shapes, thus resulting in expensive production professes.

It is an airn of the present invention to solve the aforementioned problems and provide a process and a device to produce decorative parts or components with a veneer layer of wood, fabrics or other decorative materials, in a reliable and economic way that gives very good aesthetic results and that reduces the manual finishing times. The present invention addresses the aforementioned problems. Such problems are solved by the features of the independent claims. Further detail of the invention are defined in the dependent claims.

According to one aspect of the invention, the veneer layer sheet comprises one layer of wood veneer or other decorative material bonded to one layer of backing material selected from thermoplastic or thermosetting materials and is pre-formed prior to the final thermoplastic-material injection step that provides the required supporting and coupling layer. According to a further aspect, the layer of rigid material is transparent and is located on the external side of the decorative material layer.

According to a still further aspect of the invention, the pre-forming step is carried out in a mold having a male and a female part, wherein the male part comprises a projecting element that is at least in part deformable to adapt its shape to the shape of the female part and to accordingly shape the decorative layer. The male part projecting element is made of rubber, e.g. silicone rubber, that can be full or provided with an internal cavity that can be expanded upon feeding of a pressurized fluid.

According to another aspect of the invention, one of the layers of the decorative layer is provided with electrically resistant means, such as a layer of electrically resistant coating, to act as heating means for a steering wheel or similar component.

During the closing of the mold or at the beginning of the injection step, the veneer layer sheet is held in position against the respective mold half. This holding in position action can be carried out with retaining means such as jacks, struts, needles or similar moving elements, or by the mentioned pre-forming of the veneer layer. Because the layer is pre-formed accurately, it already has a shape that is almost the final one and will therefore fit snugly in the mold half without requiring any mechanical means. If, because of the final shape a self-retaining effect cannot be achieved and mechanical means are required, such as those previously mentioned, they project from the mold half that does not house the veneer layer and are mobile between an extended position and a retracted position; the force applied by said projecting elements to the covering sheet is such as to maintain the sheet in position at least during the initial step of the molding process. Thus, for the present invention the wording "holding in position" refers to both the above ways only through the shape or with mechanical means.

According to a further aspect of the invention, a varnish or a coating layer is injected on the side of the cavity that corresponds to the face of the decorative sheet, after the thermoplastic-material injection step.

A further aspect of the invention is a mold for pre-forming the decorative components, comprising two mold halves, a cavity and a deformable forming means positioned in one of said mold halves.

A further aspect of the invention is a decorative component as obtainable with the method of manufacturing described above, comprising a veneer layer, at least one layer of backing material selected from thermoplastic or thermosetting materials, at least one coupling layer of thermoplastic material having means of attachment and/or undercuts provided into said thermoplastic material.

A still further aspect of the invention are steering wheel shells having a veneer layer as obtainable according to the invention method of manufacturing.

Preferably, the decorative components obtained according to the invention comprise a first layer of thermoplastic glued to the decorative material layer and a second layer of thermoplastic injected onto the said first layer. A layer of fabric or non-woven fabric may be bonded externally to the layer of thermoplastic glued to the decorative material layer in order to improve flexibility and the adhesion of the injected material on the decorative portion.
Fig. 1 is a perspective view in partial section of two half-shells according to the invention.
Figs. 2, 3 and 4 are schematic cross sectional views of the method of molding half-shells according to the invention.
Fig. 5 is a schematic cross sectional view of a liner sheet to be used in the method of manufacturing according to the invention.
Fig. 6 is a partially magnified cross sectional view of the bonded half-shells of Fig. 1.
Figs. 7 and 8 are schematic cross sectional views of a pre-forming mold during two steps of the pre-forming process.
Fig. 9 is an enlarged exploded view of a veneer element after preforming of Figs. 7 and 8 and injection molding.
Fig. 10 is a perspective view of the veneer element of Fig. 9.
Fig. 11 is a cross sectional view of a rim of a steering wheel manufactured in accordance with the present invention.

As used herein and in the claims the term decorative components for motor vehicle interiors refers to steering wheel shells, handles, gear-change lever knobs, inserts for door interior panels, dashboards and similar articles.

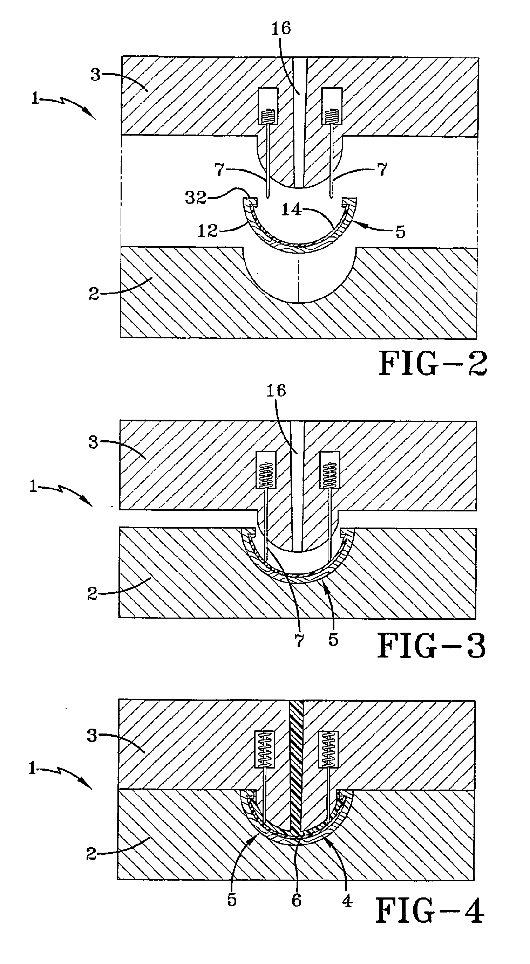

With reference to Figs. 2-4, a mold 1 according to the present invention comprises mold halves 2, 3, which when closed define a cavity 4 having a shape corresponding to the design of a decorative component for a car interior, for example a knob for a gear-change lever; a shell for a steering wheel; an insert for a dashboard or for an interior panel for a door. In the embodiment shown and discussed herein, reference is made to a pair of half-shells for a steering wheel, but the same remarks are valid for other decorative components. Similarly, the decorative component disclosed hereinafter is provided with a wood veneer, but instead of wood, the veneer could be made of a fabric, e.g. carbon fiber fabric or aramid fibers, leather and other materials.

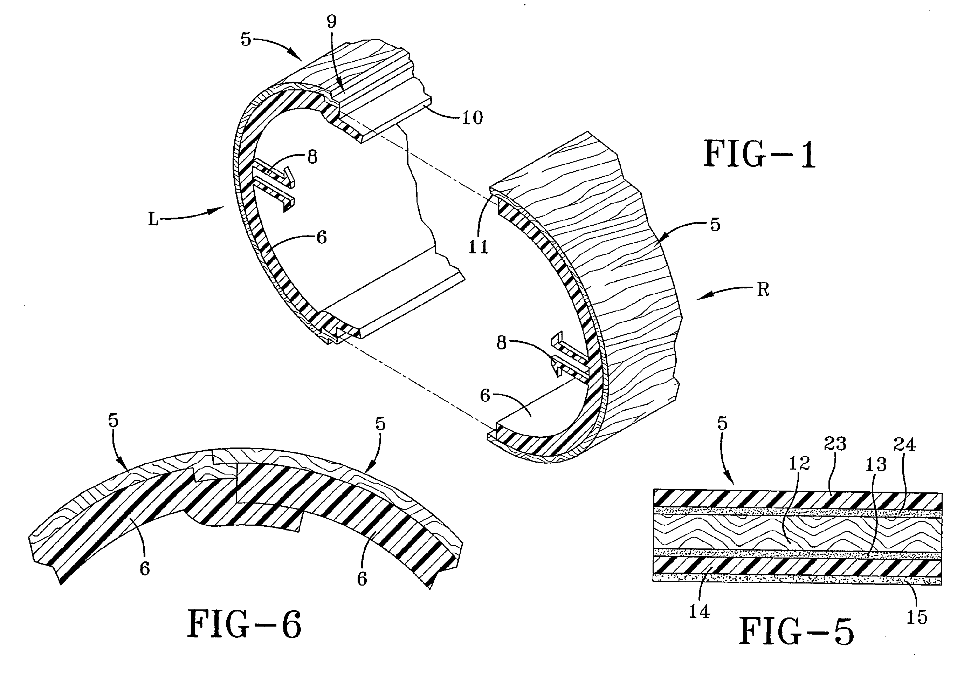

A pre-shaped layer 5 comprising a layer of veneer material (wood, fabric or other) 12 (Fig. 5) and a backing layer 14 of thermoplastic or thermosetting material, is placed in the mold, held in position and an amount of a thermoplastic material 6 is injected onto the back of the layer 5. To maintain the layer of wood 5 in position during the closing of the mold and to prevent it from moving from the desired position, in one embodiment of the invention the mold is provided with a means of retaining the layer 5 in position. In Figs. 2 - 4 such a means of retaining position is exemplified by retractable small rods or needles 7, which move between an extended position with the mold open (Fig. 2), a partially retracted one at the beginning of the injection step, and a retracted one, in which they are positioned when the injection of thermoplastic support material is partially completed (Fig. 4).

Fig. 3 shows the mold-closing step, in which rods 7 hold in position the steering wheel half-shell 5 in the mold half 2 before being retracted in the last step of the injection molding process. Alternatively, other known means such as for example needles, clips, suction pads, temporary adhesives can be used to hold in position the veneer layer sheet 5.

The injection molding conditions are e.g. those used in the technique known as "In Mold Labeling (IML)" or "In Mold Dekorieren (IMD)" and involve low injection pressures; in the inventive method injection pressures are related to the dimension of the decorative component. For example, injection molding of wood veneered steering wheel rim sectors, using a 30% glass reinforced polyamide, is carried out at a pressure within the range of 1.100 and 1.500 Kg/cm², depending upon the shell length. In spite of the injection pressure being relatively low, the pressure is however sufficient to press the pre-shaped sheet 5 against the mold half 2 and to give the sheet or layer 5 the desired shape and dimensions. Thermoplastic materials suitable for injection molding of layer 6 are polyolefins and polypropylene in particular, polyamides, ABS and vinyl polymers.

The mold half 3 is designed to mold hooks 8 or similar means of attachment of the half-shell to a steering wheel, dashboard or panel, as well as reinforcing ribs and other structural components as required. In Fig. 1 the two half-shells L and R are used for covering a steering wheel all the way around its circumference, i.e. for 360°. To enable an overlap without showing gaps, the half-shell L is provided with a locking step 9 and with a portion 10 of the thermoplastic layer of 6 protruding with respect to the layer of wood 5. The corresponding half-shell R presents a portion 11 of the sheet 5 that projects beyond the injected thermoplastic layer 6 in order to provide a complementary shape to the locking step 9. Once the half-shells L and R are joined, as shown in Fig. 6, a portion 10 of layer 6 of the half-shell L overlaps layer 6 of the half-shell R; the two half-shells can be welded using ultrasonic energy, vibration, "hot gas" and other known techniques of welding thermoplastic. In this way, the use of adhesives and the problems associated therewith are avoided.

The mold half 3 is provided with at least one nozzle 16 for injecting the thermoplastic layer. In the simplest embodiment shown in Figs. 1-5, the sheet 5 is backed by a layer 6 comprising a thermoplastic material that provides the structural and coupling layer required. If the dimensions of the sheet are reduced one nozzle may be sufficient, but it is often preferred to inject through two or more nozzles in order to use low injection pressures. The nozzles can feed one or more thermoplastic materials according to the type of decorative component being produced. Different materials can be injected in various portions of the mold to give a portion of decorative component where the veneer is a wood sheet and a portion where the "veneer" is an imitation leather thermoplastic material, that was injection molded in that area.

The technique of using different injection molding materials is known and used in the production of car trim panels and will make possible e.g. car dashboards and door panels to be produced, in which the wood veneer is bonded to the panel as a single piece.

It is also possible to use the invention's laminates to produce panels or other products having a "simple" shape by compression molding; with this method the decorative material, possibly or preferably pre-formed, is shaped and bonded to a supporting layer of thermoplastic material by compression in a mold.

The wood or other material veneer sheet 5, on the back of which the thermoplastic 6 is injected, is sufficiently formable to be initially pre-formed and to be later imparted the final shape, completely, as a result of the of injection molding step. Such a sheet 5 is preferably made of a laminate of thermoplastic and a veneer material such as wood or fabric or leather or other material. Fig. 5 shows an example of such a laminate, with a wood veneer.

The sheet 5 in Fig. 5 comprises a layer of wood 12 (but other materials may be used) bonded by means of a thin layer of glue 13 to a layer of thermoplastic or thermosetting material 14 that ensures the necessary support and form (i.e. shape) retaining properties to the wood layer in order to retain the shape imparted to the laminate sheet 5 with the pre-forming step. In other embodiments the sheet 5 is comprising a layer of resistive material 15 such as e.g. an electrically resistive coating or varnish located externally to the film 14 or, alternatively, the resistive coating 15 is applied directly to the layer of wood 12 and thermoplastic layer 14 is bonded to the varnish 15. Electric contacts will be provided in a known way, e.g. by means of laminae provided in correspondence of hooks 8 (Fig. 1).

Fig. 5 also depicts a further layer 23 of transparent plastics such as a polycarbonate or polyester film that is bonded by means of an adhesive layer 24 to the external side of layer 12. The use of this transparent film results in ready to use shells after injection molding has been carried out as above disclosed, i.e. there is no need of coating the wood or fabric layer after injection molding. Film layer 23 is either thin and used in addition to layer 14, that is in this case the form-retaining means, or film layer 23 is thick enough to be used as an alternative to layer 14, i.e. film layer 23 acts both as a coating and as a form retaining element.

The product thus obtained is formable and resistant to stretching and can be easily pre-formed into the desired shape without the wood veneer surface cracking. The layer 12 of wood (or fabric or other decorative material) that has to be laminated with the remaining layers 15 and 23 is known in the art, is described, for example, in EP 0 376 993 B, US 4,430,371 A, and US 4,205,107 A and is commercially available.

The thickness of the wood veneer 12 is between 0.1 and 1.2 mm and preferably between 0.4 and 0.8 mm; the adhesive has a minimal thickness, for example around 0.01 - 0.05 mm, the transparent layer 23 has thickness within the range of 0.1 to 0.3 mm and the sheet or film of thermoplastic 14 has thickness of between 0.08 and 0.8 mm and preferably between 0.1 and 0.4 mm. Suitable adhesives are hot-melt adhesives, for example vinyl or polyester, and acrylic or neoprene adhesive. Materials for the thermoplastic film are selected from PVC, polyolefins, ABS and similar materials suitable to provide a formable support. The laminate is obtained as a flat sheet that is cut as necessary and is subsequently pre-formed into the required shape.

By using the formable, and pre-formed, laminates, in particular those having a wood veneer, above described, it is possible to produce by injection or compression molding decorative components for car interiors that range from gear lever knobs to steering wheels and from door panels to dashboards.

An advantage of the invention is the use of formable laminates having a thickness of 1.8 mm or less, comprising one veneer layer and at least one layer of thermoplastic material, for the production of decorative components for car interiors.

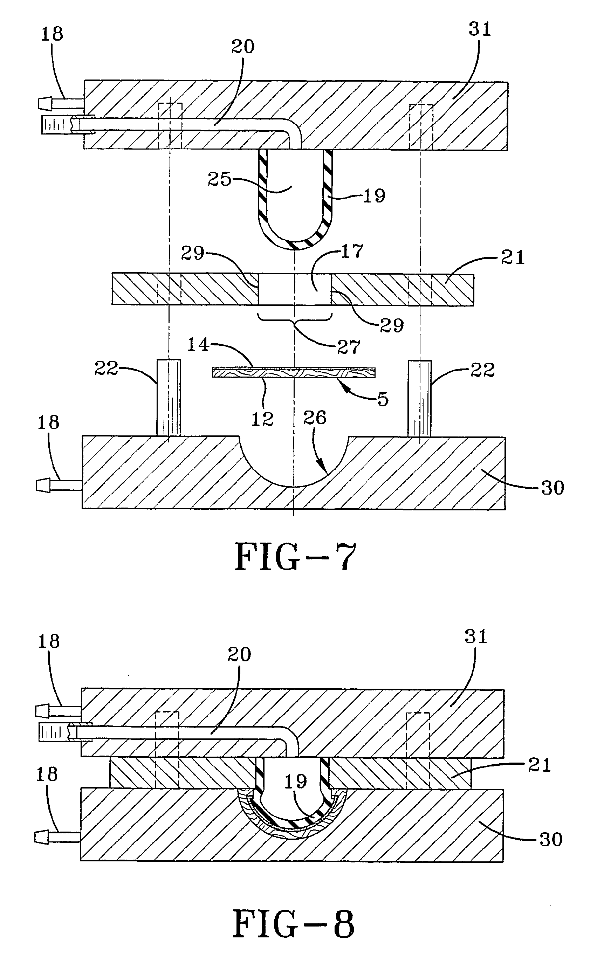

Figs. 7 and 8 show a mold for pre-forming the laminates according to the invention. Such a mold comprises two mold halves 30, 31 that define a cavity that has the shape required. The two mold halves are provided with a means 18 of regulating the temperature, such as e.g. a circuit for oil, to increase and to reduce the temperature in the shortest possible time.

A mold half 31 is provided with a male portion comprising a projecting portion 19 that is at least partially deformable and that is housed in the cavity 26 of the mold half 30 when the mold is closed. This deformable projecting portion 19. In the shown embodiment the deformable means has a cavity 25 and is formed by expandable means that can increase its volume, i.e. by an inflatable silicone rubber bladder that can be pressurized to increase its volume. To pressurize the bladder 19 it is connected to a duct 20, that is connected to a source of pressure, e.g. of compressed air (not shown). Fig. 7 also shows an insert 21 (i.e. an intermediate or additional mold portion) that is located between the two mold halves 30, 31 to form a locking step or rim 32. The insert 21 has an opening 17 therein that generally corresponds to the shape of the cross-section of the cavity 26 of the mold halves 30, but with a smaller area. In other words, the distance 27 between the sides 29 of the opening 17 for inflatable element 19 is greater than the distance between the corresponding edges of cavity 26 of mold half 30. Thus, when the insert 21 is positioned on mold half 30, a step is formed that will produce the required locking rim (Fig. 8); the pre-formed laminate layer L (Fig. 1) is thus produced. When the pre-formed laminate layer R of Fig. 1 is to be produced, the insert 21 is replaced by an insert wherein the distance 27 and the distance 28 are the same, to avoid the forming of a step.

Instead of a bladder, the deformable element 19 can be made of a solid, deformable material, such as silicone rubber or a foamed polymer having density sufficient to press the laminate layer 5 against the mold cavity walls to impart the required, and exact, shape to laminate 5. In other words, the element 19 is deformed to follow the shape of the cavity 26 and of the insert 21. The deformed element 19 compresses laminate 5 against the walls of cavity 26 and insert 21 to reproduce the required exact shape to be obtained.

The operation of the pre-forming mold will now be described. The insert 21 is positioned on the mold half 30 by guides 22 present on the mold half 30. Then a sheet 5, cut to the desired size and shape, is positioned in the cavity of the mold half 30 from above i.e. through opening 17 of insert 21. As the mold is closed the deformable protruding portion 19 is inserted into the cavity 26 of the mold half 30, through the insert 21. Then, the mold halves 30, 31 are heated and the bladder 19 is pressurized by feeding compressed air through a conduit. The bladder 19 is inflated until it firmly presses the sheet 5 against the walls of the mold half 30 and a part of the insert 21. By the combined action of heat and pressure a laminate sheet 5 is formed into a shape that can be very close to the final one. In fact, it is possible to obtain parts pre-formed so well that in the following co-molding step there is no need for additional retaining means to retain the sheet 5 in the injection mold.

When the sheet 5 is of the type laminated with a thermoplastic film, the temperature of the mold halves 30, 31 has to be lower than the melting point or degradation temperature of the glue present in the laminate, while trying to make pre-forming cycles as fast as possible. For the sheets used for the present invention the temperature used is between 50 and 200 °C and preferably between 55 and 100°C; the pressure is between 4 and 6 bars, usually approximately 5 bars and the cycle time between 3 and 60 seconds.

The same mold and the same process can be used for the mold preparation of products in carbon fiber; in this case the times are of approximately 20 minutes and the pressure used is approximately 0,3-0,4 MPa (3 - 4 bar), with a temperature between 70°C and 180°C, applied in different steps, depending upon the dimensions and the shape of the decorative component.

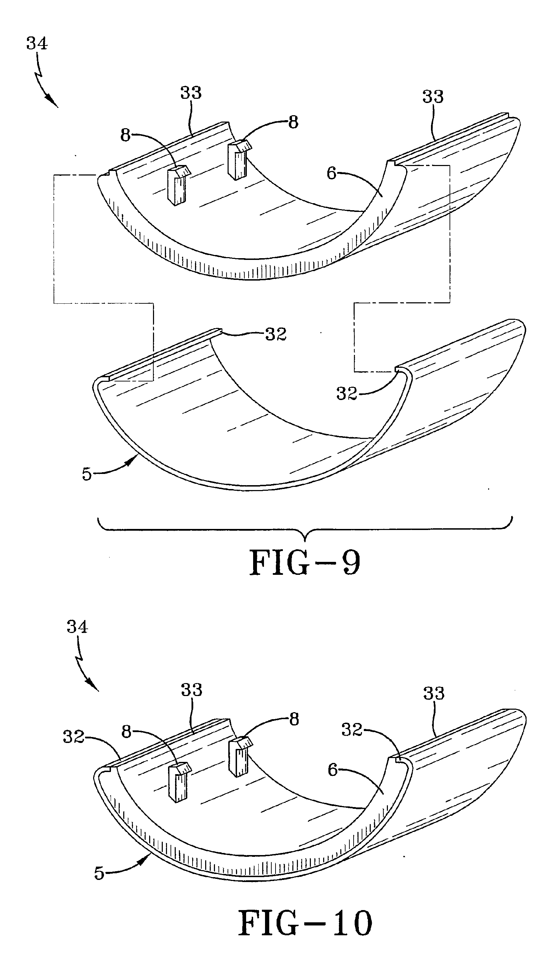

Figs. 9 and 10 show a veneer element for steering wheels that is smaller than the half shell above disclosed, said element being an insert for a steering wheel having a main surface made e.g. of leather. The insert is to be housed in a seat provided in the leather coating. The net, exact shape of the insert obtained thanks to the process of the invention is clearly visible in these figures. The layer 5 has been pre-formed as above discussed to result in a shape comprising a peripheral step or rim 32. After injection molding of thermoplastic layer 6 (Figs. 3-4) the resulting veneer element comprises a decorative layer 5 that ends with steps 32 and a supporting layer 6 that comprises peripheral "counter-steps" 33 that matches steps 32 to provide an even peripheral edge 34. No further steps are required to bring peripheral edge into the required shape. This is a great advantage when considering that inserts and half shells for steering wheels are in fact curved in two directions: transversally to the steering wheel and along its circumference. In other words, the pre-forming of the veneer layer into a form that is retained makes it possible to shape it to follow the shape of the steering wheel and to avoid further production steps for finishing the edges.

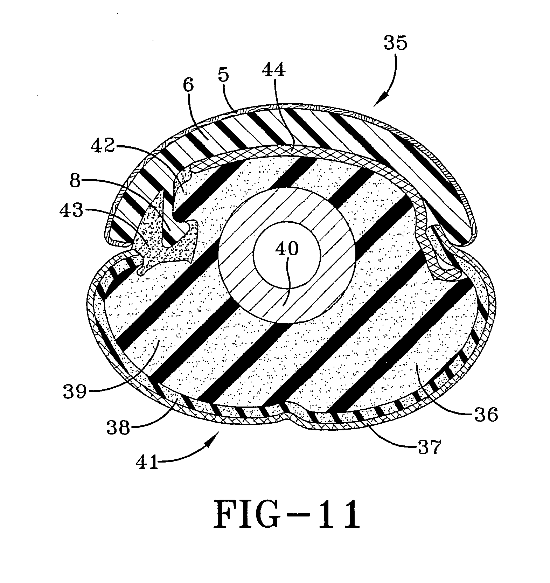

Fig. 11 is a cross sectional view of the rim of a steering wheel manufactured according to the present invention showing insert 35 in place on a steering wheel armature 40, an expansion resin (PUR foam) 39, and a first partial coating 41 covering more or less half of the circumference of the steering wheel section and comprising an inner layer 38 of foam material glued or coupled to an outer layer 37 made of leather. On the steering wheel side opposite to that covered by the leather layer coating 41 the PUR foam 39 is shaped into at least one seat 42 that acts as a retaining means for hook 8 of the insert 35. Glue 43 is provided in seat 42 and around hook 8 to firmly retain it to the PUR foam 39. In the shown embodiment, a heating element 44 is located between PUR foam 39 and plastic supporting layer 6 of insert 35; alternatively, a heating element such as a resistive layer can be located between the plastic layer 6 and the laminate layer 5, as previously discussed.

The invention will now be further disclosed with reference to the following example.

### EXAMPLE

A formable laminate comprising a wood veneer layer 0.75 mm thick, a thermoplastic material layer 0.21 mm thick and a backing fabric layer, having a total thickness of 1.1 mm is cut to an arched shape of 130° C. The thus cut laminate is preformed in a pre-forming mold as above disclosed for 50 sec at 90° C and 0,48 MPa (4.8 bar) (pressure of the fluid fed to the inflatable bladder). The pre-formed laminate was then positioned in a mold and retained in position by suction means. A 30% fiberglass reinforced polyamide was injected on the back of the laminate to give a half shell with a perfect shape and without cracks of the wood layer. The injected supporting layer of thermoplastic material is provided with integral hooks for mounting on the steering wheel structure. After finishing and light sanding the shell is lacquered and polished to give an excellent decorative component that can be fit to a steering wheel.

Returning to the "In Mold" molding step of the pre-formed sheet, it has been mentioned that this allows hooks, webbing and similar details to be obtained in a single piece. If no transparent layer 23 is present, the invention makes it possible to directly paint the part in the mold for injection molding, according to the known "In-mold paint" techniques, such as by injection either of a transparent polyurethane varnish or of a coating layer.

The invention shows several advantages over the prior art. The invention solves the problem for open and closed shape parts in steering wheels shells lowering the cost of production. The invention enables the production in one-shot co-molding process of decorative components with a wood, leather or fabric finish, already provided with undercuts, rims and means of attachment such as hooks and similar, as necessary for their final use. The pre-forming and molding times are reduced and the temperature and pressure requirements are moderated.

The method of manufacturing is simple and reliable and the parts produced are aesthetically very attractive. Moreover, by co-molding by injection molding the thermoplastic support a "net shape" part is obtained, i.e. no machining is required to achieve the final shape of the part.

## Claims

1. A method of manufacturing a component for a vehicle interior comprising the steps of:
(a) preparing a laminate layer (5) comprising a veneer layer (12) and a formable and form-retaining layer (14) selected from thermoplastic or thermosetting plastic materials;
(b) pre-forming said laminate layer to substantially its final shape in a mold having a cavity (26) and a male portion, said male portion comprising a deformable element (19) to shape said laminate layer (5) according to said cavity (26);
(c) positioning said pre-formed laminate layer (5) in an injection mold (1) and injecting into said mold (1) one or more thermoplastic materials (6) on the back of the said pre-formed laminate (5) to provide laminate having a support and coupling layer (6);
wherein a peripheral rim or step (9, 32) is formed during said step b).

2. The method of manufacturing a component for a vehicle interior according to claim 1, wherein said laminate (5) comprises a veneer layer (12) bonded to a transparent film material (23).

3. The method of manufacturing a component for a vehicle interior according to claim 1 wherein said laminate (5) comprises a layer of resistive material (15).

4. The method of manufacturing a component for a vehicle interior according to claim 2 wherein said laminate (5) comprises a layer of resistive material (15).

5. The method of manufacturing a component for a vehicle interior according to claim 1 wherein said veneer material comprises wood (12).

6. The method of manufacturing a component for a vehicle interior according to claim 2 wherein said veneer material comprises wood (12).

7. The method of manufacturing a component for a vehicle interior according to claim 3 wherein said veneer material comprises wood (12).

8. The method of manufacturing a component for a vehicle interior according to claim 1 wherein means of attachment (8) of the decorative component are molded integral with said injected support layer.

9. The method of manufacturing a component for a vehicle interior according to claim 1 wherein said veneer material (12) comprises at least one material selected from a group consisting of wood, fabrics, carbon fiber, and aramid fiber.

10. The method of manufacturing a component for a vehicle interior according to claim 1 further comprising an "In-Mold Paint" step.

11. A component for a vehicle interior manufactured by the method of claim 1 comprising a veneer material (12) bonded to a first layer (14) of formable and form retaining material selected from thermosetting or thermoplastic material, said laminate layer (5) being bonded with one layer (6) of thermoplastic material produced by injection molding.

12. The component for a vehicle interior according to Claim 11 that is a shell for a steering wheel.

13. The component for a vehicle interior according to claim 11 wherein said veneer material (12) comprises wood.

14. The component for a vehicle interior according to claim 12 wherein said veneer material (12) comprises wood.

15. A mold for pre-forming sheets of formable veneer material for a component for a vehicle interior comprising two mold halves (30, 31) defining a cavity (26), expandable means (19) located on one of said mold halves (31) and projecting into said cavity when the mold is closed, and means (20, 25) of expanding said expandable means (19) and causing it to occupy substantially all said cavity (26), further comprising at least one insert (21) for the production of undercuts, steps and locking rims (8).

## Patentansprüche

1. Verfahren zur Fertigung einer Komponente für ein Fahrzeuginneres, wobei das Verfahren folgende Schritte umfasst:
(a) das Vorbereiten einer Laminatschicht (5), die eine Fumierschicht (12) und eine formbare und die Form beibehaltende Schicht (14), ausgewählt aus thermoplastischen oder warmaushärtenden Kunststoffmaterialien, umfasst,
(b) das Vorformen der Laminatschicht im Wesentlichen zu ihrer endgültigen Gestalt in einer Form, die einen Hohlraum (26) und einen Patrizenabschnitt hat, wobei der Patrizenabschnitt ein verformbares Element (19) umfasst, um die Laminatschicht (5) entsprechend dem Hohlraum (26) zu formen,
(c) das Anordnen der vorgeformten Laminatschicht (5) in einer Spritzgussforin (1) und das Einspritzen von einem oder mehreren thermoplastischen Materialien (6) in die Form (1) auf der Rückseite des vorgeformten Laminats (5), um ein Laminat bereitzustellen, das eine Trag- und Kopplungsschicht (6) hat,
wobei während des Schritts b) eine umlaufende Kante oder Stufe (9, 32) geformt wird.

2. Verfahren zur Fertigung einer Komponente für ein Fahrzeuginneres nach Anspruch 1, wobei das Laminat (5) eine Furnierschicht (12) umfasst, die mit einem transparenten Folienmaterial (23) verbunden ist.

3. Verfahren zur Fertigung einer Komponente für ein Fahrzeuginneres nach Anspruch 1, wobei das Laminat (5) eine Schicht aus einem widerstandfähigen Material (15) umfasst.

4. Verfahren zur Fertigung einer Komponente für ein Fahrzeuginneres nach Anspruch 2, wobei das Laminat (5) eine Schicht aus einem widerstandfähigen Material (15) umfasst.

5. Verfahren zur Fertigung einer Komponente für ein Fahrzeuginneres nach Anspruch 1, wobei das Furniermaterial Holz (12) umfasst.

6. Verfahren zur Fertigung einer Komponente für ein Fahrzeuginneres nach Anspruch 2, wobei das Furniermaterial Holz (12) umfasst.

7. Verfahren zur Fertigung einer Komponente für ein Fahrzeuginneres nach Anspruch 3, wobei das Furniermaterial Holz (12) umfasst.

8. Verfahren zur Fertigung einer Komponente für ein Fahrzeuginneres nach Anspruch 1, wobei Mittel (8) zur Befestigung der zierenden Komponente integral mit der eingespritzten Tragschicht geformt werden.

9. Verfahren zur Fertigung einer Komponente für ein Fahrzeuginneres nach Anspruch 1, wobei das Furniermaterial (12) wenigstens ein Material umfasst, das ausgewählt ist aus einer Gruppe, die aus Holz, Geweben, Kohlefaser und Aramidfaser besteht.

10. Verfahren zur Fertigung einer Komponente für ein Fahrzeuginneres nach Anspruch 1, das ferner einen Schritt des "Anstrichs in der Form" umfasst.

11. Komponente für ein Fahrzeuginneres, gefertigt durch das Verfahren nach Anspruch 1, wobei sie ein Furniermaterial (12) umfasst, das an eine erste Schicht (14) aus einem formbaren und die Form beibehaltenden Material, ausgewählt aus thermoplastischem oder warmaushärtendem Material, gebunden ist, wobei die Laminatschicht (5) mit einer durch Spritzgießen hergestellten Schicht (6) aus thermoplastischem Material verbunden ist.

12. Komponente für ein Fahrzeuginneres nach Anspruch 11, die eine Hülle für ein Lenkrad ist.

13. Komponente für ein Fahrzeuginneres nach Anspruch 11, wobei das Furniermaterial Holz (12) umfasst.

14. Komponente für ein Fahrzeuginneres nach Anspruch 12, wobei das Furniermaterial Holz (12) umfasst.

15. Form zum Vorformen von Bahnen aus einem formbaren Furniermaterial für eine Komponente für ein Fahrzeuginneres, wobei die Form zwei Formhälften (30, 31), die einen Hohlraum (26) bilden, ausdehnbare Mittel (19), die an einer der Formhälften (31) angeordnet sind und in den Hohlraum vorspringen, wenn die Form geschlossen ist, und Mittel (20, 25) zum Ausdehnen der ausdehnbaren Mittel (19) und Veranlassen, dass sie im Wesentlichen den gesamten Hohlraum (26) einnehmen, umfasst, wobei sie ferner wenigstens einen Einsatz (21) für die Herstellung von Unterschneidungen, Stufen und Verriegelungskanten (8) umfasst.

## Revendications

1. Procédé de fabrication d'un composant pour l'intérieur d'un véhicule, comprenant les étapes ci-dessous :
(a) préparation d'une couche stratifiée (5), comprenant une couche de placage (12) et une couche formable et à retenue de la forme (14)), sélectionnée parmi des matériaux plastiques thermoplastiques ou thermodurcissables ;
(b) préformage de ladite couche stratifiée, pratiquement à sa forme finale, dans un moule comportant une cavité (26) et une partie mâle, ladite partie mâle comprenant un élément déformable (19) pour former ladite couche stratifiée (5) en fonction de ladite cavité (26) ;
(c) positionnement de ladite couche stratifiée préformée (5) dans un moule par injection (1) et injection dans ledit moule (1) d'un ou de plusieurs matériaux thermoplastiques (6), sur l'arrière dudit stratifié préformé (5), pour former un stratifié comportant une couche de support et une couche d'accouplement (6) ;
dans lequel un bord ou un gradin périphérique (9, 32) est formé au cours de ladite étape b).

2. Procédé de fabrication d'un composant pour l'intérieur d'un véhicule selon la revendication 1, dans lequel ledit stratifié (5) comprend une couche de placage (12) reliée à un matériau de film transparent (23).

3. Procédé de fabrication d'un composant pour l'intérieur d'un véhicule selon la revendication 1, dans lequel ledit stratifié (5) comprend une couche de matériau résistant (15).

4. Procédé de fabrication d'un composant pour l'intérieur d'un véhicule selon la revendication 2, dans lequel ledit stratifié (5) comprend une couche de matériau résistant (15).

5. Procédé de fabrication d'un composant pour l'intérieur d'un véhicule selon la revendication 1, dans lequel ledit matériau de placage comprend du bois (12).

6. Procédé de fabrication d'un composant pour l'intérieur d'un véhicule selon la revendication 2, dans lequel ledit matériau de placage comprend du bois (12).

7. Procédé de fabrication d'un composant pour l'intérieur d'un véhicule selon la revendication 3, dans lequel ledit matériau de placage comprend du bois (12).

8. Procédé de fabrication d'un composant pour l'intérieur d'un véhicule selon la revendication 1, dans lequel des moyens de fixation (8) du composant décoratif sont moulés d'une seule pièce avec ladite couche de support injectée.

9. Procédé de fabrication d'un composant pour l'intérieur d'un véhicule selon la revendication 1, dans lequel ledit matériau de placage (12) comprend au moins un matériau sélectionné dans un groupe constitué de bois, de tissus, de fibres de carbone et de fibres d'aramide.

10. Procédé de fabrication d'un composant pour l'intérieur d'un véhicule selon la revendication 1, comprenant en outre une étape de « peinture dans le moule ».

11. Composant pour l'intérieur d'un véhicule, fabriqué par le procédé selon la revendication 1, comprenant un matériau de placage (12) relié à une première couche (14) de matériau formable et à retenue de la forme, sélectionné parmi des matériaux thermodurcissables ou thermoplastiques, ladite couche stratifiée (5) étant reliée à une couche (6) de matériau thermoplastique produite par moulage par injection.

12. Composant pour l'intérieur d'un véhicule selon la revendication 11, constitué par une coque pour un volant.

13. Composant pour l'intérieur d'un véhicule selon la revendication 11, dans lequel ledit matériau de placage (12) comprend du bois.

14. Composant pour l'intérieur d'un véhicule selon la revendication 12, dans lequel ledit matériau de placage (12) comprend du bois.

15. Moule pour le préformage de feuilles de matériau de placage formable pour un composant pour l'intérieur d'un véhicule, comprenant deux moitiés de moule (30, 31) définissant une cavité (26), un moyen à dilatation (19), agencé dans l'une desdites moitiés de moule (31) et débordant dans ladite cavité lorsque le moule est fermé, et un moyen (20, 25) pour dilater ledit moyen à dilatation (19) et l'entraîner à occuper pratiquement l'ensemble de ladite cavité (26), comprenant en outre au moins un insert (21) pour la production d'entailles, de gradins et de bords de verrouillage (8).
